# NEUE EUROPÄISCHE PATENTSCHRIFT

(11) **EP 1 936 246 B2**
(45) Veröffentlichungstag und Bekanntmachung des Hinweises auf die Entscheidung über den Einspruch: **03.04.2013**
(45) Hinweis auf die Patenterteilung: 20.05.2009
(21) Anmeldenummer: 06026192.2
(22) Anmeldetag: 18.12.2006
(51) Int. Cl.: F16J 15/02, F16J 15/06, E04B 1/68

(54) **Dichtband aus Weichschaum und Verfahren zu seiner Herstellung**
Sealing tape of foam material and its method of manufacture
Bande en mousse et sa méthode de fabrication

(43) Veröffentlichungstag der Anmeldung: 25.06.2008
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 0 072 955
- EP-A1- 0 219 296
- WO-A-98/45565
- WO-A1-01/55279
- DE-A1- 1 784 467
- DE-A1- 4 307 528
- US-A- 4 204 373
- US-A- 4 356 676
- PROSPEKT TREMCO ILLBRUCK Bd. 04, 2005,
- PROSPEKT TREMCO ILLBRUCK Bd. 07, 2005,
- PROSPEKT TREMCO ILLBRUCK Bd. 03, 2004,
- PROSPEKT TREMCO ILLBRUCK Bd. 03, 2002,
- PROSPEKT TREMCO ILLBRUCK Bd. 08, 2003,
- KWD FENSTER November 2004,
- 'Formblatt Erfassung Externe Reklamationen' 04 Oktober 2005,
- 'Auszug des Besprechungsprotokol' 13 Oktober 2005,
- 'Flyer Messe Fensterbau' März 2004,
- 'Flyer Messe Bau' Januar 2005,
- 'Preisliste illbruck' Juni 2001,
- 'Planungsordner Abdichtungsssysteme' Februar 2004,
- 'Rechnung' 22 November 2006,
- 'Meyers ENZYKLOPÄDISCHES LEXIKON', LEXIKONVERLAG
- 'Meyers Lexikon der Technik', ALLGEMEINER VERLAG
- 'Brockhaus Enzyklopädie', Bd. 19,
- 'Lueger Techniklexikon', April 1972
- 'Lueger Techniklexikon', August 1972

## Beschreibung

Die Erfindung betrifft ein Dichtband aus weichem Schaumstoff.

Dichtbänder aus weichem und flexiblen Schaumstoffmaterial werden in der Bautechnik zum Abdichten gegen Luftzug und Schlagregen eingesetzt. Für den Hausgebrauch durch den Endverbraucher gibt es die allgemein bekannten Schaumstoffbänder von in der Regel wenigen Millimetern Dicke, die einseitig mit einer von einer Trennfolie abgedeckten Selbstklebeschicht versehen sind und unkomprimiert auf Rollen gewickelt sind. Sie werden für die Abdichtung undicht gewordener Fenster und Türen zwischen Fenster- bzw. Türflügel und Fenster- bzw. Türrahmen eingesetzt. Hierzu werden sie an passender Stelle am Flügel oder am Rahmen angeklebt.

Im professionellen Hochbau werden Dichtbänder, die zumeist imprägniert sind, aus weichem und flexiblem Schaumstoff zwischen Fenster- und Türrahmen und einem Mauerwerk eingesetzt. Solche Dichtbänder können bis zu einigen Zentimetern dick sein und sind gewöhnlich einseitig mit einer Selbstklebeschicht versehen, mit der sie an den Rahmenprofilelementen von Fenstern und Türen angeklebt werden können. Dichtbänder dieser Art sind häufig mit einem Material imprägniert, das die Rückstellung des Schaumstoffmaterials aus einem komprimierten Zustand, in dem sie auf Rolle angeliefert werden, in einen entspannten Zustand verzögert, um die Montage des mit dem Dichtband versehenen Bauelements auf der Baustelle zu erleichtern.

Zur Verhinderung einer Dampfdiffusion werden Dichtbänder der vorgenannten Art benötigt, die mit einer Dampfsperre versehen sind. Aus DE 196 41 415 C2 ist ein Dichtband aus offenporigem Material in zu einer Scheibe aufgerollter Form zum Abdichten von Fugen oder Spalten gegen Luftzug und/oder Schlagregen bekannt, bei dem wenigstens eine Sperrschicht innerhalb des Dichtbandes in solcher Konfiguration angeordnet ist, dass sie und die angrenzenden offenporigen Bereiche in axialer Richtung aufgereiht sind. Die Sperrschicht verläuft also in radialer Richtung der Dichtbandrolle.

Um ein Dichtband der letztgenannten Art herzustellen, werden großflächige Sperrschichten durch lagenweises Laminieren und/oder Verkleben von Platten- oder Bahnware eines offenporigen Rohschaummaterials zu Laminatblöcken ausgebildet. Die Laminatblöcke werden dann orthogonal zu den großflächigen Sperrschichten aus Laminierungsmaterial und/oder Klebstoff zu Tafeln mit Sperrschichten getrennt, so dass sich nach dem Trennen die Sperrschichten parallel zu einem Rand der Tafel und senkrecht durch die Tafel erstrecken. Eine solche Tafel wird dann unter Kompression zu einer Rolle so aufgewickelt, dass die Sperrschichten und das offenporige Material auf dem Umfang der Rolle in axialer Richtung aufgereiht sind. Anschließen wird die Rolle zwischen einzelnen Sperrschichten in Scheiben getrennt. Diese Verfahrensweise ist relativ kompliziert und erfordert eine hohe Maßhaltigkeit des Schaumstoffmaterials bei der Verarbeitung, weil sonst beim Trennen der Rolle in Scheiben die Gefahr einer Beschädigung der Sperrschichten besteht.

Aus DE 24 57 322 A1 ist ein Verfahren bekannt, mit dem Kunststoffkörper aus offenporigem Schaumstoff an ihren Außenflächen durch Aufsprühen mit einem Polyurethanüberzug versehen werden können. Allerdings verlangt das Verfahren eine spezielle Vorbereitung des Schaumstoffs. Es ist nicht dafür geeignet, bei komprimierten Schaumstoffkörpern, die sich im Gebrauch entspannen sollen, angewendet zu werden, da der im komprimierten Zustand aufgebrachte Überzug das Entspannen behindern oder gar ganz unmöglich machen würde. Würde nur ein dünner Überzug aufgebracht, der das Entspannen des Schaumstoffs ermöglicht, bestünde die Gefahr einer Rissbildung im Überzug. Das Aufbringen des Überzugs durch Aufsprühen im entspannten Zustand ist bei Dichtbändern aus technischen Gründen unwirtschaftlich.

Die WO 98/45565 zeigt ein Dichtband mit einem ablösbaren Folienüberzug, der das Dichtband im komprimierten Zustand an drei Seiten bedeckt.

Der Erfindung liegt die Aufgabe zugrunde, ein mit einem Folienband ausgerüstetes Dichtband, das sich einfach herstellen lässt, sowie Verfahren und Vorrichtungen zu dessen Herstellung anzugeben.

Diese Aufgabe wird hinsichtlich des Dichtbandes durch die in Anspruch 1 angegebene Erfindung gelöst. Verfahren und Vorrichtungen zum Herstellen des Dichtbandes sind Gegenstand weiterer Ansprüche. Vorteilhafte Ausgestaltungen der Erfindung sind Gegenstand der jeweils abhängigen Ansprüche.

Grundsätzlich lassen sich komprimiert und unkomprimiert gelieferte Dichtbänder aus weichem und flexiblem Schaumstoffmaterial unterscheiden. Die Erfindung lässt sich grundsätzlich bei beiden Lieferformen nahezu gleichermassen anwenden.

Bei komprimiert gelieferten Dichtbändern ist das Folienband mit wenigstens einem Randstreifen an der Unterseite des Schaumstoffbandes angeheftet, die üblicherweise dafür vorgesehen ist, das Dichtband an einem abzudichtenden Bauelement, etwa am Rahmenprofilelement eines Fensters oder einer Tür, anzukleben. Diese Seite des Schaumstoffbandes ist mit einer Selbstklebeschicht versehen, die dann auch das Folienband festhält.

Das Folienband ist breit genug, sich auch im eingebauten Zustand des Bauelements, in dem das Schaumstoffband, das die Hauptkomponente des Dichtbandes bildet, teilentspannt ist, vollständig über die ihr benachbarte freiliegende Seitenflanke des Dichtbandes zu erstrecken. Gegebenenfalls kann das Folienband so breit sein, dass es sich über eine der im komprimierten Zustand breiten Seiten, über die beiden Seitenflanken und über Randstreifen des Schaumstoffbandes erstreckt.

Als Folienband ist an erster Stelle an eine Dampfsperrfolie gedacht, womit dann das erfindungsgemäße Dichtband dieselbe Funktion übernehmen kann, wie das in DE 196 41 415 C2 beschriebene Dichtband. Das Folienband kann aber auch eine UV-Sperrfolie sein, die das von ihr bedeckte Schaumstoffmaterial gegen UV-Lichteinflüsse schützen soll. Auch Folien, die unter ästhetischen Gesichtspunkten ausgewählt sind, etwa metallisierte oder farbige Folien, sind denkbar. Ganz allgemein, die Erfindung kann mit jeder Art folienhaftem, biegeschlaffem Bandmaterial realisiert werden, das nach den individuellen Bedürfnissen ausgewählt ist, einschließlich textiler Materialien oder aus mehreren Schichten bestehenden Laminaten.

Ein bedeutender Vorteil des erfindungsgemäßen Dichtbandes besteht darin, dass ein voll bewegungsfähiges System geschaffen ist, bestehend aus einem weichen, elastischen Schaumstoffband und einem Folienband, wobei das Folienband so mit dem Schaumstoffband verbunden ist, dass es sich über den gesamten Funktionsbereich des Dichtbandes bewegen kann. Beim Aufgehen des Weichschaumstoffbandes durch elastische Rückstellung nach Montage des damit ausgerüsteten Bauelements steht die seitliche Bewegungsreserve des Folienbandes zur Verfügung, die quasi verbraucht wird, ohne dass sich das Folienband dehnen muss.

Das erfindungsgemäße Dichtband ist in Form von schmalen Dichtbandrollen, wegen ihrer Abmessungen auch Dichtbandscheiben genannt, herstellbar, ohne dass hierfür eine spezielle Vorbereitung des Schaumstoffmaterials bei der Herstellung von Dichtbandscheiben, die vom allgemein Üblichen abweicht, erforderlich ist. Sie sieht vielmehr vor, solche Dichtbandscheiben nachträglich mit einer biegeschlaffen Folie, beispielsweise einer Dampfsperrfolie, in Form einer Folienbahn auszurüsten.

Anders als in DE 196 41 415 C2 beschrieben, wird zur Herstellung von Dichtbandscheiben üblicherweise eine breite Weichschaumstoffbahn, die mit einem die Expansion verzögernden Mittel getränkt sein kann, einseitig mit einer Abdeckfolie, beispielsweise aus Silikonpapier, abgedeckt. Vor dem Aufbringen der Abdeckfolie wird auf das Schaumstoffmaterial eine Selbstklebeschicht aufgebracht werden. Die so vorbereitete Schaumstoffbahn wird ggf. unter mechanischem, die Dicke der Schaumstoffbahn verminderndem Druck aufgerollt und gesichert, beispielsweise indem das Ende der äußersten Dichtbandlage mit der darunter liegenden Dichtbandlage verklebt wird, etwa mit Hilfe eines Klebestreifens. Die so gebildete, komprimierte bzw. unkomprimierte Schaumstoffrolle wird dann in Scheiben einer vorgegebenen Breite getrennt, beispielsweise durch Zersägen. Von dieser bewährten Verfahrensweise macht die Erfindung identisch Gebrauch. Es folgen aber besondere Schritte.

Bei einer ersten Ausführungsform der erfindungsgemäßen Verfahrensweise wird davon ausgegangen, dass die Komprimierung des weichen Schaumstoffmaterials beim Wickeln der Rolle, aus der die Dichtbandscheiben geschnitten werden, nicht so fest ist, dass das Schaumstoffmaterial innerhalb der Scheibe in radialer Richtung nicht mehr weiter zusammengedrückt werden kann. Bei dem nun zu beschreibenden Verfahren wird innerhalb der Dichtbandscheibe die Verbindung zwischen der Selbstklebeschicht und der Abdeckfolie fortschreitend mechanisch gelöst, beispielsweise mit Hilfe eines pflugförmigen, gegenüber der Dichtbandscheibe bewegten Schuhs, und in den dadurch erzeugten Spalt wird ein biegeschlaffes Folienband, beispielsweise ein Dampfsperrfolienband, eingelegt und an die durch die Spaltbildung freigelegte Selbstklebeschicht angeheftet. Anschließend schließt sich der Spalt wieder von selbst durch die Rückstellung des Schaumstoffmaterials, sobald der Schuh sich fortbewegt hat.

Das von der Dichtbandscheibe vorstehende Folienband hat noch eine Restbreite, die vorzugsweise der Summe der Dicke einer Schaumstofflage im komprimierten Zustand und der Breite der Dichtbandscheibe entspricht. Bei einem so dimensionierten Dichtband darf sich das Schaumstoffband nach der Montage des damit ausgerüsteten Bauelements maximal um die Breite des Dichtbandes entspannen, ohne dass die vollständige Bedeckung der einen Seitenfläche desselben durch das Folienband verloren geht. Dieses Folienband wird nun fortlaufend auf die Dichtbandscheibe umgelegt und zwischen die Schaumstofflage, mit der der betreffende Abschnitt des Folienbandes verklebt ist, und die auf der benachbarten Schaumstofflage klebenden Trennfolie eingeschoben, wieder beispielsweise mit Hilfe eines pflugförmigen Schuhs. Es ist aber auch möglich, die Restbreite des Folienbandes größer zu machen und beispielsweise auch auf die andere Seite der Dichtbandscheibe umzulegen oder in längs verlaufenden Falten zwischen die Windungen der Dichtbandscheibe einzuschieben.

Hat das Dichtband beispielsweise eine Ausgangshöhe des Schaumstoffbandes von 30 mm und ist es im Wickel auf eine Höhe von 4 - 5 mm zusammengedrückt, dann ist sein Einsatzbereich häufig vom Hersteller auf eine bestimmte Spaltbreite, z.B. von 15 mm begrenzt, die von dem Dichtband überbrückt werden soll. Denn man lässt das Schaumstoffmaterial nicht weiter entspannen, damit es an der Gebäudewand fest anliegt. In der Praxis liegt der Funktionsbereich eines solchen Dichtbandes also zwischen 4 und 15 mm.

Der Funktionsbereich des Dichtbandes, der die zu wählende Folienbandbreite bestimmt, ist somit durch den Kompressionsumfang des Schaumstoffmaterials innerhalb des Wickels und die maximale Rückstellung des Schaumstoffmaterials nach Montage des damit ausgerüsteten Bauelements bestimmt. Die minimale Dicke nach Kompression von getränkten Schaumstoffen liegt derzeit bei etwa 10% der Originaldicke. Die Rückstellung nach Kompression erreicht die Originaldicke manchmal nicht mehr.

Wird das Folienband nur mit einem Randstreifen an das Weichschaumband angeheftet, kann bei ausreichender Breite des Folienbandes dieses bis auf die andere Seite der Dichtbandscheibe durchgeschoben und mit seinem anderen Randstreifen auf dieselbe Seite des Weichschaumbandes umgeschlagen werden, an der der erste Randstreifen angeheftet ist, wird dort jedoch nicht angeheftet, sondern auf die klebfreie Seite der Abdeckfolie gelegt.

Es ist auch möglich, das Folienband über die volle Breite an das Selbstklebeschicht, sofern vorhanden, anzuheften und sie auf beiden Seiten der Dichtbandscheibe vorstehen zu lassen, um dann beide vorstehenden Abschnitte um die Windung des Schaumstoffbandes zu legen, an der der betreffende Längenabschnitt des Folienbandes angeheftet ist. Damit die Klebeeigenschaft des Dichtbandes erhalten bleibt, muss in diesem Falle allerdings entweder das Folienband in dem Bereich, in dem es die klebende Schicht bedeckt, mit ausreichend großen Durchbrüchen oder Löchern versehen sein, dass die klebende Schicht von außen wirksam zugänglich bleibt. Das ist zum einen notwendig, um die Abdeckfolie festzuhalten, und zum anderen, um nach dem Abziehen der Abdeckfolie die selbstklebende Montage am abzudichtenden Bauelement zu ermöglichen.

Die fertige Dichtbandscheibe ist also wenigstens einseitig von einem Folienband bedeckt, das sich gleich dem Schaumstoffmaterial wie eine Schnecke windet.

Vorzugweise erfolgt das Anheften des Folienbandes an das Schaumstoffband und das anschließende Einschieben des von der Dichtbandscheibe vorstehenden Folienbandes zwischen die Windungen des Dichtbandes in einem einzigen Arbeitsgang.

Bei unkomprimierten Schaumstoffrollen lässt sich das Verfahren nahezu identisch anwenden.

Bei einer zweiten erfindungsgemäßen Verfahrensweise wird das Dichtband vergleichbar dem Umspulen eines Tonbandes umgewickelt. Das Dichtband wird also von der Dichtbandscheibe abgewickelt und sogleich auf einen zweiten Wickelkörper wieder aufgewickelt. Sofern das Schaumstoffmaterial des Dichtbandes bereits komprimiert ist, wird es in dem Intervall zwischen dem Abwickeln und dem Wiederaufwickeln in komprimiertem Zustand gehalten, sei es durch mechanische Mittel oder durch eine das Expandieren ausreichend verzögernde Tränkung des Schaumstoffmaterials. In diesem Intervall wird vor dem Wiederaufwickeln die Abdeckfolie, von der von ihr bedeckten Selbstklebeschicht wenigstens auf einem Teil ihrer Breite gelöst, in den so gebildeten Spalt wird eine Teilbreite eines Folienbandes gewünschter Art eingeführt und angeheftet, und der Spalt anschließend wieder geschlossen. Dann wird die übrige Breite des Folienbandes auf das Schaumstoffband umgeschlagen, bevor das auf diese Weise fertig ausgerüstete Dichtband auf den sich neu bildenden scheibenförmigen Wickel gelangt. In der fertig gewickelten, in der erfindungsgemäßen Weise ausgerüsteten Dichtbandrolle oder -scheibe liegt somit jeweils Folienmaterial zwischen der Abdeckfolie der einen Windung und dem Schaumstoffmaterial der benachbarten Windung des Dichtbandes. Die Breite des Folienbandes ist wie bei der an erster Stelle beschriebenen Verfahrensweise gewählt.

Bei Ausführung des Verfahrens mit Umwickeln des Dichtbandes von einer Rolle auf eine andere kann auch ein unkomprimiertes Dichtband verarbeitet werden, das einhergehend mit dem Ausrüsten mit dem Folienband vor dem Wiederaufwickeln komprimiert wird, um eine komprimierte Dichtbandscheibe zu ergeben.

Beim Umwickeln des Schaumstoffbandes von der einen Rolle auf die andere Rolle kann die Selbstklebeschicht auf das Schaumstoffband aufgebracht werden, entweder als klebende Masse oder als ein zweiseitig klebendes Band, mit anschließender Abdeckung durch die erwähnte Abdeckfolie. Es ist ferner möglich, ein Folienband zu verwenden, das an seiner Wickelaußenseite mit einer Selbstklebeschicht und einer diese abdeckenden Abdeckfolie versehen ist. In diesem Falle braucht das auf der ersten Rolle befindliche, Schaumstoffband nicht mit einer Abdeckfolie versehen zu sein.

Für ein ausreichend sicheres Anheften des Folienbandes an das Schaumstoffmaterial des Dichtbandes reicht es, wenn etwa 1 - 2 mm der Breite des Folienbandes in den bei der Ausrüstung vorübergehend erzeugten Spalt zwischen der Selbstklebeschicht und der Abdeckfolie eingeführt und an die Selbstklebeschicht angeheftet wird.

Eine erste vorteilhafte Vorrichtung zum Ausrüsten eines Weichschaumdichtbandes rechteckigen Querschnitts in der vorgenannten Art mit einem Folienband umfasst einen Drehteller zum Auflegen der Dichtbandscheibe, eine Einrichtung zum Festhalten der Dichtbandscheibe auf dem Drehteller in einer auf die Drehachse desselben zentrierten Lage, wenigstens einen über dem Drehteller an einem Träger befestigten, pflugförmigen Schuh, der eine Ablaufkante und eine Rückseite aufweist, eine Einrichtung zum Bewegen des Trägers in radialer Richtung gegenüber dem Drehteller, eine Einrichtung zum Zuführen des Folienbandes zu dem Schuh von der Rückseite desselben, eine Einrichtung zum Absenken des Trägers in Richtung auf den Drehteller und eine Einrichtung zum Drehen des Drehtellers in der von der Rückseite zur Ablaufkante des Schuhs weisenden Richtung.

Im Gebrauch dieser Vorrichtung wird das Folienband von der Rückseite her unter den Schuh zugeführt, der die Gestalt eines Pfluges oder Schnitzwerkzeugs mit V-förmigem Querschnitt hat. Dieser Schuh wird auf die Dichtbandscheibe mit seinem Scheitel voran abgesenkt und zwischen die Selbstklebeschicht und die diese abdeckende Abdeckfolie einer Dichtbandlage eingeführt, etwa 1 bis 5 mm tief. Durch die V-förmige Gestalt des Schuhs wird hierdurch ein Spalt gebildet, in den der Schuh das Folienband eindrückt. Die Dichtbandscheibe wird nun in der Richtung gedreht, dass das von dem Schuh an das Dichtband angeheftete Folienband an der Ablaufkante des Schuhs vorbei und diesem weg gezogen wird. Der Schuh pflügt sich dann seine Bahn in Verfolgung der Windungen des Dichtbandes, vergleichbar der Abtastnadel eines traditionellen Plattenspieles, die Windungen des Dichtbandes verfolgend. Dabei kann die Bahnverfolgung von außen nach innen oder von innen nach außen, je nach Wickelrichtung des Dichtstreifens, erfolgen.

Vorzugsweise ist an dem Träger, der den Schuh hält, in radialem und im Drehwinkel versetztem Abstand ein zweiter pflugförmiger Schuh angeordnet, der das vom ersten Schuh an das Dichtband angeheftete Folienband auf die Dichtbandscheibe umlegt und sogleich in den Zwischenraum zwischen der bereits ausgerüsteten Wicklungslage und der benachbarten, noch nicht ausgerüsteten Wicklungslage einschiebt. Dabei sollte der zweite Schuh gegenüber dem ersten Schuh radial verstellbar gehalten sein, um die Vorrichtung unterschiedlichen Dichtbanddicken anpassen zu können.

Sollen beide Seiten des Schaumstoffbandes in dieser Weise bearbeitet werden, ist eine entsprechende zweite Vorrichtung erforderlich, auf die die einseitig ausgerüstete Dichtbandscheibe umgelegt wird, um nachfolgend bearbeitet zu werden.

In einer zweiten Ausführungsform hat die Vorrichtung zwei Wickelstände, von denen der eine, der Abwickelstand, dazu bestimmt ist, eine zu bearbeitende Dichtbandscheibe aufzunehmen, und der andere, der Aufwickelstand, dazu bestimmt ist, den Wickelkörper aufzunehmen, auf den das nach der erfindungsgemäßen Weise fertig ausgerüstete Dichtband aufzuwickeln ist, mit den zugehörigen Einrichtungen zum Abbremsen des ersten Wickelstandes und zum Antreiben des zweiten Wickelstandes. Zwischen den beiden Wickelständen ist eine Einrichtung angeordnet mit einem Schuh, der dazu eingerichtet ist, zwischen die Abdeckfolie und die Selbstklebeschicht wenigstens in einen Randbereich des zwischen den beiden Wickelständen umgespulten Schaumstoffmaterials eingeführt zu werden. Weiterhin ist ein dritter Wickelstand vorhanden, der zur Aufnahme einer Folienbandspule vorgesehen ist. Zwischen dem dritten Wickelstand und dem Schuh erstrecken sich Führungseinrichtungen zum Zuleiten eines Folienbandes vom dritten Wickelstand zu dem genannten Schuh. Zwischen dem Schuh und dem zweiten Wickelstand befinden sich Einrichtungen zum Umschlagen des Folienbandes auf die freien Flächen des Schaumstoffbandes.

Sofern mit der zweiten Ausführungsform ein Dichtband verarbeitet werden soll, dessen Schaumstoffmaterial nicht mit einem seine Rückstellung verzögernden Material getränkt ist, befinden sich in dem Zwischenraum zwischen den ersten und zweiten Wickelständen Einrichtungen, die dazu geeignet sind, das von dem ersten Wickelstand abgewickelte Dichtband wenigstens weitgehend in dem komprimierten Zustand zu halten, in dem es den ersten Wickelstand verlässt. Dieses ist erforderlich um sicherzustellen, dass das Folienband auf die freiliegende Oberseite des Schaumstoffmaterials umgeschlagen werden kann.

Gemäß einer weiteren Verfahrensvariante wird eine breite, weichelastische Schaumstoffbahn wenigstens einseitig mit einer Folienbahn laminiert. Die so ausgerüstete Schaumstoffbahn wird zur Rolle aufgewickelt und dann in einzelne Scheiben einer Breite zertrennt, die der Höhe eines Dichtbandes im unkomprimierten Zustand desselben entspricht. Die so hergestellten Schaumstoffscheiben werden dann abgewickelt, und das Schaumstoffband wird dann unter Verdrehung um 90° und unter Kompression wieder zu einer Dichtungsscheibe aufgewickelt, in der die von der wenigstens einen Folie bedeckte Seitenflanke des Dichtbandes eine flache Seite der Dichtbandscheibe bildet. Vor dem Wiederaufwickeln des Dichtbandes kann eine der Flächen des Schaumstoffbandes, die einer mit Folienband bedeckten Seiten benachbart ist, mit einem Selbstklebestreifen und einer diesen abdeckenden Trennfolie versehen werden.

Als Folienbänder können glatte Bänder verwendet werden. Es ist auch möglich, Folienbänder zu verwenden, die wenigstens in einem Teilbereich ihrer Breite mit längs verlaufenden Falten versehen sind. Das hat den Vorteil, dass auch bei einem sehr weiten Rückstellen des komprimierten Weichschaumstoffbandes nach der Montage des Dichtbandes die Gesamtbreite des Folienbandes ausreicht, eine Seitenfläche des Schaumstoffbandes vollständig zu bedecken. Die Falten können ggf. mit einem sich verzögert nachgebenden Kleber versehen sein, wodurch es möglich wird, die Rückstellung des Schaumstoffmaterials aus dem komprimierten Zustand auch dann zu verzögern, wenn das Schaumstoffmaterial nicht mit einem die Rückstellung verzögernden Material imprägniert ist.

Eine weitere Variante sieht vor, ein Folienband zu verwenden, das auf einem Teilbereich seiner Breite eine längs verlaufende Tasche ausbildet. Diese Tasche ist dazu bestimmt, nach dem Entspannen des Dichtbandes auf einer der sichtbaren Seiten des Schaumstoffbandes zu liegen, kann mit einem Material gewünschter Qualität gefüllt sein, beispielsweise mit einem intumeszierenden Material.

In den Zeichnungen sind schematisch einige Ausführungsbeispiele von erfindungsgemäßen Dichtbändern im Querschnitt dargestellt. Es zeigt:
- Fig. 1: eine erste Ausführungsform mit einem Folienband, das mit Löchern versehen ist und im Übrigen vollflächig an der Selbstklebeschicht des Schaumstoffbandes haftet;
- Fig. 2: eine zweite Ausführungsform mit einem Folienband, deren einer Rand unter der Abdeckfolie und deren anderer Rand über der Abdeckfolie liegt;
- Fig. 3: eine dritte Ausführungsform mit einem Folienband, das das Weichschaumband nur einseitig bedeckt;
- Fig. 4: eine vierte Ausführungsform mit zwei Folienbändern, die beide Seiten des Weichschaumbandes bedecken;
- Fig. 5: eine fünfte Ausführungsform mit einer Folienband, das eine längs verlaufende Tasche aufweist;
- Fig. 6: eine sechste Ausführungsform mit einem Folienband, das längs verlaufenden Falten hat;
- Fig. 7: eine Variante von Fig. 6, bei der die Falten des Folienbandes mit einem verzögert nachgebenden Klebstoff gefüllt sind; und
- Fig .8a bis 8c: den Vorgang des Entspannens des komprimierten Weichschaumbandes bei einem erfindungsgemäßen Dichtband der Ausführungsform von Fig. 3.

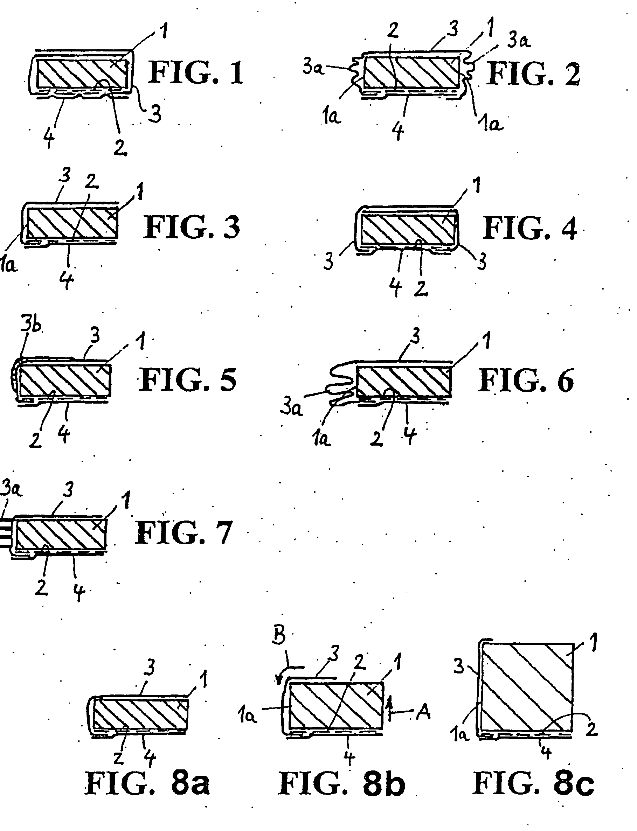

In allen Zeichnungen sind ein Schaumstoffband, eine Klebeschicht, das Folienband bzw. die Folienbänder und die Abdeckfolie mit gegenseitigem Abstand dargestellt, um die Lage dieser Elemente im Bezug zueinander deutlich zu machen. Es sei daher betont, dass in Wirklichkeit die Elemente dicht aufeinander liegen, d. h. sich gegenseitig berühren und aufeinander gedrückt sind. Es ist weiter hervorzuheben, dass die Figuren stets den Querschnitt eines Dichtbandes zeigen, und zwar in den Figuren 1 bis 7 und 8a in einem Zustand, wie er anzutreffen ist, wenn das Dichtband in komprimiertem Zustand auf einen Wickelkörper gewickelt ist.

In Figur 1 erkennt man ein Schaumstoffband 1, dass im komprimierten Zustand dargestellt ist. Es hat in dem gezeigten Zustand einen flachen, rechteckigen Querschnitt und ist an seiner einen Seite, die hier und bei allen nachfolgend erläuterten Beispielen als Unterseite bezeichnet werden soll, mit einer Selbstklebeschicht 2 versehen, die gestrichelt eingezeichnet ist. An der Unterseite des Schaumstoffbandes 1 ist mittels der Selbstklebeschicht 2 ein Folienband 3 befestigt, das erheblich breiter ist als das Schaumstoffband 1. Die über die Breite des Schaumstoffbandes 1 hinausgehenden Seitenstreifen des Folienbandes 3 sind um das Schaumstoffband 1 herumgelegt und überdecken sich auf der Oberseite des Schaumstoffbandes 1. In dem an der Selbstklebeschicht 2 haftenden Bereich ist das Folienband 3 mit einer Vielzahl von Durchbrüchen oder Löchern versehen. An der Unterseite des Schaumstoffbandes 1 ist das Folienband 3 von einer Abdeckfolie 4 abgedeckt. Die Durchbrüche oder Löcher in dem Folienband 3 sind ausreichend groß, dass durch Andrücken der Abdeckfolie 4 eine Haftung derselben durch Löcher des Folienbandes 3 hindurch an der Selbstklebeschicht 2 erzielt ist.

Figur 2 zeigt eine Ausführungsform der Erfindung, bei der ein mit einer Selbstklebeschicht 2 einseitig versehenes Schaumstoffband 1 von einem Folienband 3 umhüllt ist, dessen einer Rand zwischen die Selbstklebeschicht 2 und einer auf der Selbstklebeschicht 2 klebenden Abdeckfolie 4 eingefügt sind und von der Selbstklebeschicht 2 gehalten wird und dessen anderer Rand auf der Abdeckfolie 4 liegt und in dem Wickel (nicht gezeigt) zwischen der Trennfolie 4 und dem Schaumstoffband 1 der benachbarten Windung (nicht gezeigt) gehalten ist. Das Folienband 3 hat im Bereich der Seitenflanken 1a des Schaumstoffbandes 1 eine Aufgehreserve in Form von lockeren Falten 3a, die auch durch nur eine einzige Falte oder Ausbauchung des Folienbandes 3 realisiert sein können. Wenn das Schaumstoffband 1 aus dem in Fig. 2 gezeigten Zustand aufgeht, kann das Folienband 3 über die in Fig. 2 rechte Seitenflanke 1a des Schaumstoffbandes 1 nachrutschen und ermöglicht insgesamt ein extrem starkes Aufgehen des Schaumstoffbandes 1, ohne die in Fig. 2 linke Seitenflanke 1a desselben unbedeckt zu lassen.

Figur 3 zeigt eine dritte Ausführungsform der Erfindung, bei der ein Folienband 3 an einem Rand der Unterseite eines Schaumstoffbandes 1 zwischen einer an der Unterseite des Schaumstoffbandes 1 befindlichen Selbstklebeschicht 2 und dem Rand einer diese abdeckenden Abdeckfolie 4 eingefügt ist. Das Folienband 3 ist an einer Seitenflanke 1a des Schaumstoffbandes 1 hoch geführt und über die Oberseite desselben gelegt.

Figur 4 zeigt eine Abwandlung der Ausführungsform von Figur 3, die sich von letzterer dadurch unterscheidet, dass an der Unterseite des Schaumstoffbandes 1 beidseitig Folienbänder 3 an die Selbstklebeschicht 2 angeheftet und von den Rändern der Abdeckfolie 4 abgedeckt sind. Die beiden Folienbänder 3 sind um das Schaumstoffband 1 geschlungen und überdecken sich einander an dessen Oberseite.

Figur 5 zeigt eine zweite Variante der Ausführungsform von Figur 3. Diese unterscheidet sich von der Ausführungsform nach Figur 3 dadurch, dass an dem Folienband 3 eine längslaufende Tasche 3b ausgebildet ist, die mit einem Material vorbestimmter Qualität gefüllt sein kann, beispielsweise einem intumeszierenden Material. Im Übrigen stimmt diese Ausführungsform mit der nach Figur 3 überein. Es sei an dieser Stelle betont, dass die Ausführungsform nach Figur 5 auch im Sinne der Figur 4 abgewandelt werden kann, dass nämlich zwei Folienbänder 3 vorgesehen sind, von denen nur eine oder auch beide mit einer Tasche 3b nach Figur 5 ausgerüstet sein können.

Figur 6 zeigt eine dritte Variante der Ausführungsform von Figur 3. Bei dieser Ausführungsform bildet das Folienband 3 an der Seitenflanke 1a des Schaumstoffbandes 1 eine Reihe von Falten 3a aus, die es zulassen, dass das Schaumstoffband 1 beim Entspannen eine größere Höhe erreicht, als bei der Ausführungsform von Figur 3, ohne dass die Seitenflanke 1a vom Folienband 3 unbedeckt bleibt. Auch diese Ausführungsform kann wieder im Sinne der Ausführungsform von Figur 4 symmetrisch aufgebaut sein. Die Falten 3a können auch auf der Oberseite des Dichtbandes wie eine Art Schlaufe angeordnet sein (in der Zeichnung nicht dargestellt). Dabei kann zusätzlich der Teil der Falte 3a, der die Oberseite des Dichtbandes berührt, dort punktuell oder flächig befestigt sein (z.B. geklebt), wobei der restliche Teil der Falte 3a die Aufgehreserve bildet und bei Expansion des Schaumstoffes 1 freigegeben wird.

Die Ausführungsform von Figur 7 ist eine Variante der Ausführungsform von Figur 6. Sie unterscheidet sich von letzterer dadurch, dass die Falten 3a im Inneren mit einem verzögernd nachgebenden Klebstoff verklebt sind, der es zulässt, dass sich das Schaumstoffband 1 in einem größeren Umfang entspannt, dies jedoch nur mit einer von dem genannten Klebstoff bestimmten Geschwindigkeit tut.

Die Figuren 8a bis 8c zeigen die Wirkungsweise eines Dichtbandes nach der Erfindung, wobei hier als Beispiel für die Erläuterung hier jenes nach Figur 3 herangezogen wird. Figur 8a zeigt den Zustand des Dichtbandes auf der Rolle, ohne allerdings die Rolle darzustellen. Diesen Zustand nimmt das Dichtband auch noch ein unmittelbar, nachdem man es von der Rolle gelöst hat, ein, sofern das Schaumstoffband 1 mit einer seiner Rückstellung verzögernde Imprägnierung getränkt ist. Im weiteren Verlauf steht dann aufgrund der dem Schaumstoffmaterial innewohnenden, elastischen Rückstellkraft das Schaumstoffband 1 in Richtung des Pfeils A auf. Das hat zur Folge, dass das Folienband 3 über die obere Kante rutscht, die die von dem Folienband 3 bedeckte Seitenflanke 1a mit der Oberseite des Schaumstoffbandes 1 verbindet. Diese Bewegung ist in Figur 8b mit dem Pfeil B gekennzeichnet. Am Ende der zulässigen Entspannung des Schaumstoffbandes 1 ist das Folienband 3 fast vollständig von der Oberseite des Schaumstoffbandes 1 abgerutscht und bedeckt noch die gesamte Seitenflanke 1a des Schaumstoffbandes 1. Dieser Zustand liegt beispielsweise vor, wenn ein mit dem Dichtband ausgerüstetes Rahmenbauelement in eine Gebäudeöffnung eingesetzt und durch das Dichtband an der Leibung der Gebäudeöffnung abgedichtet ist. Es ist allerdings zu betonen, dass dann die Abdeckfolie 4 abgezogen ist, da das Dichtband mithilfe der Selbstklebeschicht 2 an dem betreffenden Rahmenbauelement angeklebt ist.

## Patentansprüche

1. Dichtbandrolle mit einem zum Wickel geformten Weichschaumband (1) rechteckigen Querschnitts, das zwei am Wickel außen liegende Seitenflanken (1a), eine Oberseite und eine Unterseite hat, und mit mindestens einem Folienband (3), das wenigstens eine der Seitenflanken (1a) des Weichschaumbandes (1) bedeckt und zwei längslaufende Ränder aufweist,
wobei
die Dichtbandrolle scheibenförmig ist,
sich das Folienband (3) gleich dem Weichschaumband (1) wie eine Schnecke windet,
an der Unterseite des Weichschaumbandes (1) eine Selbstklebeschicht (2) angeordnet ist, an der mindestens ein Abschnitt des Folienbandes (3) befestigt ist, und
beide Ränder des Folienbandes (3) zwischen einander benachbarten Windungen innerhalb des Wickels liegen.

2. Dichtbandrolle nach Anspruch 1, **dadurch gekennzeichnet, dass** eine Abdeckfolie (4) die Unterseite des Weichschaumbandes (1) und die Selbstklebeschicht (2) überdeckt.

3. Dichtbandrolle nach Anspruch 1 oder 2, **dadurch gekennzeichnet, dass** das Folienband (3) die Selbstklebeschicht (2) des Weichschaumbandes (1) vollständig bedeckt, beiderseits aus dem Wickel herausgeführt ist, an der Windung, an der es unten angeklebt ist, beiderseits auf die Oberseite des Weichschaumbandes (1) umgeschlagen und mit seinen beiden Rändern zwischen diese Windung und die ihr benachbarte Windung eingefügt ist.

4. Dichtbandrolle nach Anspruch 3, **dadurch gekennzeichnet, dass** das Folienband (3) in seinem an der Selbstklebeschicht (2) haftenden Abschnitt mit einer Vielzahl von Durchbrüchen versehen ist und an seiner der Selbstklebeschicht (2) gegenüberliegenden Seite von einer Abdeckfolie (4) abgedeckt ist.

5. Dichtbandrolle nach Anspruch 1, **dadurch gekennzeichnet, dass** das Weichschaumband (1) einseitig klebend ausgerüstet und mit einer Abdeckfolie (4) versehen ist und dass das Folienband (3) eine Breite aufweist, die wenigstens der Breite des Weichschaumbandes (1) zuzüglich dessen Höhe im komprimierten Zustand entspricht, und dass der Abschnitt des Folienbandes (3) an mindestens einer Seite des Weichschaumbandes (1) in dessen Randbereich unter die Abdeckfolie (4) eingefügt ist.

6. Dichtbandrolle nach Anspruch 5, **dadurch gekennzeichnet, dass** der nicht an der Selbstklebeschicht (2) haftende Bereich des Folienbandes (3) eine Seitenflanke (1a) und die Oberseite des Weichschaumbandes (1) bedeckt.

7. Dichtbandrolle nach Anspruch 6, **dadurch gekennzeichnet, dass** der nicht an der Selbstklebeschicht (2) haftende Bereich des Folienbandes (3) auch die zweite Seitenflanke (1a) des Weichschaumbandes (1) bedeckt.

8. Dichtbandrolle nach Anspruch 7, **dadurch gekennzeichnet, dass** der zweite Rand des Folienbandes (3) zwischen die der Selbstklebeschicht (2) abgewandte Seite der Abdeckfolie (4) und die Oberseite des Weichschaumbandes (1) der benachbarten Windung eingefügt ist.

9. Dichtbandrolle nach einem der vorhergehenden Ansprüche, **dadurch gekennzeichnet, dass** das Folienband (3) in seinem an der Seitenflanke (1a) des Weichschaumbandes (1) anliegenden Abschnitt mit mehreren längslaufenden Falten (3a) versehen ist.

10. Dichtbandrolle nach einem der vorhergehenden Ansprüche, **dadurch gekennzeichnet, dass** das Folienband (3) auf der Oberseite des Weichschaumbandes (1) eine zu einer Schlaufe ausgebildete Falte aufweist, die eine Aufgehreserve bildet.

11. Dichtbandrolle nach Anspruch 9, **dadurch gekennzeichnet, dass** die Falten (3a) jeweils in sich mit einem sich verzögernd lösenden, das Aufgehen des komprimierten Weichschaumbandes (1) verzögernden Klebstoff verklebt sind.

12. Dichtbandrolle nach einem der Ansprüche 1 bis 8, **dadurch gekennzeichnet, dass** das Folienband (3) in seinem an der Seitenflanke (1a) des Weichschaumbandes (1) anliegenden Bereich mit einer längslaufenden Tasche (3b) versehen ist.

13. Dichtbandrolle nach Anspruch 12, **dadurch gekennzeichnet, dass** die Tasche (3b) mit einem intumeszierenden Material gefüllt ist.

14. Dichtbandrolle nach einem der vorhergehenden Ansprüche, **dadurch gekennzeichnet, dass** das Weichschaumband (1) innerhalb der Rolle elastisch rückstellfähig komprimiert ist.

15. Verfahren zum Herstellen einer Dichtbandrolle nach Anspruch 1 mit folgenden Schritten:
Aufbringen einer Selbstklebeschicht (2) und einer Abdeckfolie (4) auf einer Unterseite einer breiten Bahn aus Weichschaumstoff (1),
Aufrollen der Weichschaumstoffbahn und Sicherung der so gebildeten Weichschaumstoffrollenbahn,
Schneiden der Weichschaumstoffrollenbahn in scheibenförmige Dichtbandrollen einer vorgegebenen Breite,
fortschreitendes mechanisches Lösen der Verbindung zwischen der Selbstklebeschicht (2) und der Abdeckfolie (4) jeder Dichtbandrolle auf mindestens einem Teil ihrer Breite,
Einlegen eines biegeschlaffen Folienbandes (3) in den **dadurch** erzeugten Spalt, wobei das Folienband (3) eine Breite aufweist, die wenigstens der Summe aus der Breite des in den Spalt eingelegten Abschnitts des Folienbandes (3) und der Dicke einer Weichschaumstofflage im komprimierten Zustand und zumindest einem Teil der Breite der Dichtbandrolle entspricht,
Anheften des Folienbandes (3) an der Selbstklebeschicht (2) und Schließen des Spalts und
fortlaufendes Umlegen des von der Dichtbandrolle vorstehenden Bereichs des Folienbandes (3) auf die Dichtbandrolle und Einschieben des Folienbandes (3) zwischen die Oberseite der Weichschaumstofflage, mit der das Folienband (3) verklebt ist, und die auf der benachbarten Weichschaumstofflage klebende Abdeckfolie (4).

16. Verfahren nach Anspruch 15, **dadurch gekennzeichnet, dass** das Anheften des Folienbandes (3) an der Selbstklebeschicht (2) und die weitere Behandlung des von dem Dichtband abstehenden, angehefteten Folienbandes (3) in einem einzigen Arbeitsgang ausgeführt werden.

17. Verfahren zum Herstellen einer Dichtbandrolle nach Anspruch 1 mit folgenden Schritten:
Aufbringen einer Selbstklebeschicht (2) und einer Abdeckfolie (4) auf einer Unterseite einer breiten Bahn aus Weichschaumstoff (1),
Aufrollen der Weichschaumstoffbahn und Sicherung der so gebildeten Weichschaumstoffrollenbahn,
Schneiden der Weichschaumstoffrollenbahn in scheibenförmige Dichtbandrollen einer vorgegebenen Breite,
Abwickeln einer scheibenförmigen Dichtbandrolle,
fortschreitendes mechanisches Lösen der Verbindung zwischen der Selbstklebeschicht (2) und der Abdeckfolie (4) jedes abgewickelten Dichtbands auf mindestens einem Teil seiner Breite,
Einlegen eines biegeschlaffen Folienbandes (3) in den **dadurch** erzeugten Spalt, wobei das Folienband (3) eine Breite aufweist, die wenigstens der Summe aus der Breite des in den Spalt eingelegten Abschnitts des Folienbandes (3) und der Dicke einer Weichschaumstofflage im komprimierten Zustand und zumindest einem Teil der Breite des Dichtbands entspricht,
Anheften des Folienbandes (3) an der Selbstklebeschicht (2) auf mindestens einem Teil ihrer Breite und Schließen des Spalts,
fortlaufendes Umlegen des von der Dichtbandrolle vorstehenden Bereichs des Folienbandes (3) auf das Dichtband und
Aufwickeln des komprimierten Dichtbands zu einer Dichtbandrolle.

18. Verfahren nach einem der Ansprüche 15 bis 17, **dadurch gekennzeichnet, dass** die Klebeverbindung zwischen der Selbstklebeschicht (2) und der Abdeckfolie (4) nur auf einer Seite des Dichtbands und nur auf einem Teil seiner Breite fortschreitend mechanisch gelöst wird und in den **dadurch** erzeugten Spalt nur ein Randabschnitt des Folienbandes (3) eingelegt wird.

19. Verfahren nach einem der Ansprüche 15 bis 17, **dadurch gekennzeichnet, dass** die Klebeverbindung zwischen der Selbstklebeschicht (2) und der Abdeckfolie (4) zunächst auf einer ersten Seite des Dichtbands und nur auf einem Teil seiner Breite fortschreitend mechanisch gelöst wird, in den **dadurch** erzeugten Spalt ein erster Randabschnitt eines Folienbandes (3) eingelegt und angeheftet wird, wobei das Folienband (3) eine Breite hat, die die Summe aus dem Zweifachen der Breite des eingelegten Randstreifens, dem Zweifachen der Dicke des Weichschaumbandes (1) im komprimierten Zustand und der Breite des Weichschaumbandes (1) ist, dass das Folienband (3) um die Windung des Weichschaumbandes (1) geschlungen wird, an der es angeheftet ist, dass die Klebeverbindung zwischen der Selbstklebeschicht (2) und der Abdeckfolie (4) auf der anderen Seite des Dichtbands und nur auf einem Teil seiner Breite fortschreitend mechanisch gelöst wird und in den **dadurch** erzeugten Spalt der zweite Randabschnitt des Folienbandes (3) eingelegt und angeheftet wird.

20. Verfahren nach einem der Ansprüche 15 bis 19, **dadurch gekennzeichnet, dass** beim Anheften des Randabschnittes des Folienbandes (3) etwa 2 mm seiner Breite in den Spalt eingelegt und an der klebenden Fläche angeheftet werden.

21. Vorrichtung zum Herstellen einer Dichtbandrolle nach Anspruch 1 durch Ausrüsten einer Dichtbandrolle, die ein Weichschaumband (1) rechteckigen Querschnitts umfasst, das an einer Unterseite mit einer von einer Abdeckfolie (4) bedeckten Selbstklebeschicht (2) versehen ist und im komprimierten Zustand auf einem runden Wickelkörper derart zu der Dichtbandrolle aufgewickelt ist, dass sich Weichschaumband (1) und Abdeckfolie (4) in radialer Richtung abwechseln, mit einem Folienband (3), mit:
einem Drehteller zum Auflegen einer Dichtbandrolle,
einer Einrichtung zum Festhalten der Dichtbandrolle auf dem Drehteller in einer auf seine Drehachse zentrierten Lage,
wenigstens einen über den Drehteller an einem Träger befestigten, pflugförmigen Schuh, der eine Ablaufkante und eine Rückseite aufweist,
einer Einrichtung zum Bewegen des Trägers in radialer Richtung gegenüber dem Drehteller,
einer Einrichtung zum Zuführen eines Folienbandes (3) zu dem Schuh von dessen Rückseite,
einer Einrichtung zum Absenken des Trägers in Richtung auf den Drehteller und
einer Einrichtung zum Drehen des Drehtellers in der von der Rückseite zur Ablaufkante des Schuhs weisenden Richtung.

22. Vorrichtung nach Anspruch 21, bei der an dem Träger zwei pflugförmige Schuhe in gegenseitigem radialen Abstand und Drehwinkelabstand angeordnet sind.

23. Vorrichtung zum Herstellen einer Dichtbandrolle nach Anspruch 1 durch Ausrüsten einer Dichtbandrolle, die ein Weichschaumband (1) rechteckigen Querschnitts umfasst, das an einer Unterseite mit einer von einer Abdeckfolie (4) bedeckten Selbstklebeschicht (2) versehen ist und im komprimierten Zustand auf einem runden Wickelkörper derart zu der Dichtbandrolle aufgewickelt ist, dass sich Weichschaumband (1) und Abdeckfolie (4) in radialer Richtung abwechseln, mit einem Folienband (3), mit:
zwei Wickelständen, von denen ein Abwickelstand dazu geeignet ist, eine zu bearbeitende Dichtbandrolle aufzunehmen, und ein Aufwickelstand dazu geeignet ist, einen Wickelkörper aufzunehmen, auf den die erfindungsgemäße Dichtbandrolle aufzuwickeln ist, mit zugehörigen Einrichtungen zum Abbremsen des ersten Wickelstandes und zum Antreiben des zweiten Wickelstandes,
einer zwischen den beiden Wickelständen angeordneten Einrichtung mit einem Schuh, der dazu eingerichtet ist, zwischen die Abdeckfolie (4) und die Selbstklebeschicht (2) des zwischen den beiden Wickelständen verlaufenden abgewickelten Dichtbands eingeführt zu werden,
einem dritten Wickelstand, der zur Aufnahme einer Spule für ein Folienband (3) vorgesehen ist,
Führungseinrichtungen zwischen dem dritten Wickelstand und dem Schuh, die dazu eingerichtet sind, ein Folienband (3) vom dritten Wickelstand zum Schuh zu leiten, und
zwischen dem Schuh und dem zweiten Wickelstand angeordneten Umschlageinrichtungen zum Umschlagen des Folienbandes (3) auf die freie Oberseite des Weichschaumbandes (1).

24. Vorrichtung nach Anspruch 23, **dadurch gekennzeichnet, dass** sich in dem Zwischenraum zwischen dem ersten und zweiten Wickelstand Einrichtungen befinden, die dazu geeignet sind, das von dem ersten Wickelstand abgewickelte Dichtband weitgehend in dem komprimierten Zustand zu halten, in dem es den ersten Wickelstand verlässt.

## Claims

1. Sealing tape reel comprising a flexible foam tape (1) with a rectangular cross-section, which tape forms a roll, has two outer side flanks (1a) on the roll, an upper side and a lower side, and comprising at least one film tape (3) which covers at least one of the side flanks (1 a) of the flexible foam tape (1) and comprises two longitudinal edges, wherein the sealing tape reel is disc-shaped, the film tape (3) is wound like a snail in the same manner as the flexible foam tape (1), a self-adhesive layer (2) is arranged on the lower side of the flexible foam tape (1), to which layer at least a portion of the film tape (3) is fixed, and the two edges of the film tape (3) are arranged between adjacent windings inside the roll.

2. Sealing tape reel according to claim 1, **characterised in that** a covering film (4) covers the lower side of the flexible foam tape (1) and the self-adhesive layer (2).

3. Sealing tape reel according to either claim 1 or claim 2, **characterised in that** the film tape (3) fully covers the self-adhesive layer (2) of the flexible foam tape (1), extends out on both sides of the roll, is folded over on both sides over the upper side of the flexible foam tape (1) at the winding to which it is fixed from below, and is arranged with its two edges between said winding and the winding adjacent thereto.

4. Sealing tape reel according to claim 3, **characterised in that** the portion of the film tape (3) adhering to the self-adhesive layer (2) is provided with a plurality of openings and the side of the film tape opposite the self-adhesive layer (2) is covered by a covering film (4).

5. Sealing tape reel according to claim 1, **characterised in that** the flexible foam tape (1) is adhesive on one side and is provided with a covering film (4), and **in that** the width of the film tape (3) corresponds at least to the width of the flexible foam tape (1) as well as the height thereof when compressed, and **in that** the portion of the film tape (3) is arranged on at least one side of the flexible foam tape (1) in the edge region thereof below the covering film (4).

6. Sealing tape reel according to claim 5, **characterised in that** the region of the film tape (3) not adhering to the self-adhesive layer (2) covers a side flank (1 a) and the upper side of the flexible foam tape (1).

7. Sealing tape reel according to claim 6, **characterised in that** the region of the film tape (3) not adhering to the self-adhesive layer (2) also covers the second side flank (1a) of the flexible foam tape (1).

8. Sealing tape reel according to claim 7, **characterised in that** the second edge of the film tape (3) is arranged between the side of the covering film (4) remote from the self-adhesive layer (2) and the upper side of the flexible foam tape (1) of the adjacent winding.

9. Sealing tape reel according to any one of the preceding claims, **characterised in that** the portion of the film tape (3) adjacent to the side flank (1 a) of the flexible foam tape (1) is provided with a plurality of longitudinal folds (3a).

10. Sealing tape reel according to any one of the preceding claims, **characterised in that** the film tape (3) comprises a fold on the upper side of the flexible foam tape (1), which fold is configured so as to form a loop, which in turn forms an expansion reserve.

11. Sealing tape reel according to claim 9, **characterised in that** the folds (3a) are each bonded with an adhesive which slowly releases and delays the expansion of the compressed flexible foam tape (1).

12. Sealing tape reel according to any one of claims 1 to 8, **characterised in that** the region of the film tape (3) adjacent to the side flank (1 a) of the flexible foam tape (1) is provided with a longitudinal pocket (3b).

13. Sealing tape reel according to claim 12, **characterised in that** the pocket (3b) is filled with an intumescent material.

14. Sealing tape reel according to any one of the preceding claims, **characterised in that** the flexible foam tape (1) is compressed inside the reel so as to be resiliently resettable.

15. Method for producing a sealing tape reel according to claim 1, comprising the following steps:
applying a self-adhesive layer (2) and a covering film (4) to a lower side of a wide tape of flexible foam (1),
rolling up the flexible foam tape and securing the flexible foam tape reel thus formed,
cutting the flexible foam tape reel into disc-shaped sealing tape reels of a predetermined width,
progressively mechanically releasing the connection between the self-adhesive layer (2) and the covering film (4) of each sealing tape reel over at least a portion of the width thereof,
placing a flexible film tape (3) in the gap thus formed, the width of the film tape (3) corresponding at least to the sum of the width of the portion of film tape (3) arranged in the gap, the thickness of a flexible foam layer when compressed and at least a portion of the width of the sealing tape reel,
fixing the film tape (3) to the self-adhesive layer (2) and closing the gap and
continuously folding the region of the film tape (3) projecting from the sealing tape reel over the sealing tape reel and inserting the film tape (3) between the upper side of the flexible foam layer, to which the film tape (3) is fixed, and the covering film (4) adhering to the adjacent flexible foam layer.

16. Method according to claim 15, **characterised in that** the film tape (3) is fixed to the self-adhesive layer (2) and the fixed film tape (3) remote from the sealing tape is subsequently processed in a single process step.

17. Method for producing a sealing tape reel according to claim 1, comprising the following steps:
applying a self-adhesive layer (2) and a covering film (4) to a lower side of a wide tape of flexible foam (1),
rolling up the flexible foam tape and securing the flexible foam tape reel thus formed, cutting the flexible foam tape reel into disc-shaped sealing tape reels of a predetermined width,
unwinding a disc-shaped sealing tape reel,
progressively mechanically releasing the connection between the self-adhesive layer (2) and the covering film (4) of each unwound sealing tape over at least a portion of the width thereof,
placing a flexible film tape (3) in the gap thus formed, the width of the film tape (3) corresponding at least to the sum of the width of the portion of film tape (3) arranged in the gap, the thickness of a flexible foam layer when compressed and at least a portion of the width of the sealing tape,
fixing the film tape (3) to the self-adhesive layer (2) over at least a portion of the width thereof and closing the gap,
continuously folding the region of the film tape (3) projecting from the sealing tape reel over the sealing tape and
rolling up the compressed sealing tape to form a sealing tape reel.

18. Method according to any one of claims 15 to 17, **characterised in that** the adhesive connection between the self-adhesive layer (2) and the covering film (4) is only progressively mechanically released on one side of the sealing tape and only over a portion of the width thereof, and only one edge portion of the film tape (3) is arranged inside the gap thus formed.

19. Method according to any one of claims 15 to 17, **characterised in that** the adhesive connection between the self-adhesive layer (2) and the covering film (4) is initially progressively mechanically released on a first side of the sealing tape and only over a portion of the width thereof, a first edge portion of a film tape (3) is arranged and fixed inside the gap thus formed, the width of the film tape (3) equalling the sum of twice the width of the inserted edge tape, twice the thickness of the flexible foam tape (1) when compressed and the width of the flexible foam tape (1), **in that** the film tape (3) is looped around the winding of the flexible foam tape (1) to which it is fixed, **in that** the adhesive connection between the self-adhesive layer (2) and the covering film (4) is progressively mechanically released on the other side of the sealing tape and only over a portion of the width thereof, and the second edge portion of the film tape (3) is arranged and fixed inside the gap thus formed.

20. Method according to any one of claims 15 to 19, **characterised in that** when fixing the edge portion of the film tape (3), approximately 2 mm of the width thereof is arranged inside the gap and fixed to the adhesive surface.

21. Device for producing a sealing tape reel according to claim 1 by providing a sealing tape reel comprising a flexible foam tape (1) with a rectangular cross-section, which tape is provided on the lower side with a self-adhesive layer (2) covered by a covering film (4) and is rolled up in a compressed state on a round winding core to form the sealing tape reel in such a way that the flexible foam tape (1) and the covering film (4) alternate in a radial direction, with a film tape (3), comprising the following:
a rotary disc for supporting a sealing tape reel,
means for fixing the sealing tape reel on the rotary disc in a position centred on the axis of rotation of said disc,
at least one plough-shaped shoe fixed via the rotary disc to a support, which shoe comprises a runoff edge and a rear side,
means for moving the support in a radial direction relative to the rotary disc,
means for feeding a film tape (3) to the shoe from the rear side thereof,
means for lowering the support towards the rotary disc and
means for rotating the rotary disc in the direction pointing from the rear side of the shoe towards the runoff edge thereof.

22. Device according to claim 21, wherein two plough-shaped shoes are arranged on the support at a mutual radial distance and at a rotational angle interval from one another.

23. Device for producing a sealing tape reel according to claim 1 by providing a sealing tape reel comprising a flexible foam tape (1) with a rectangular cross-section, which tape is provided on the lower side with a self-adhesive layer (2) covered by a covering film (4) and is rolled up in a compressed state on a round winding core to form the sealing tape reel in such a way that the flexible foam tape (1) and the covering film (4) alternate in a radial direction, with a film tape (3), comprising the following:
two winding stands, of which an unwinding stand is suitable for receiving a sealing tape reel to be worked, and a rolling up stand is suitable for receiving a winding core on which the sealing tape reel according to the invention is to be wound, with associated means for slowing the first winding stand and for driving the second winding stand,
means arranged between the two winding stands comprising a shoe which is configured for insertion between the covering film (4) and the self-adhesive layer (2) of the unwound sealing tape extending between the two winding stands,
a third winding stand which is provided for receiving a spool for a film tape (3),
guiding means between the third winding stand and the shoe which are configured for guiding a film tape (3) from the third winding stand to the shoe, and
folding means arranged between the shoe and the second winding stand for folding the film tape (3) over the free upper side of the flexible foam tape (1).

24. Device according to claim 23, **characterised in that** in the space between the first and second winding stands, means are arranged for keeping the sealing tape unwound by the first winding stand largely in the compressed state, in which state said tape leaves the first winding stand.

## Revendications

1. Rouleau de bande d'étanchéité comprenant une bande de mousse souple (1), formée en un enroulement, de section transversale rectangulaire, qui présente deux flancs latéraux (1a), situés extérieurement sur l'enroulement, un côté supérieur et un côté inférieur, et comprenant au moins un ruban de film (3), qui recouvre au moins l'un des flancs latéraux (1a) de la bande de mousse souple (1) et présente deux bords longitudinaux,
dans lequel,
le rouleau de bande d'étanchéité est en forme de disque, le ruban de film (3) s'enroule comme un escargot de la même façon que la bande de mousse souple (1),
une couche auto-adhésive (2) est disposée sur le côté inférieur de la bande de mousse souple (1), couche sur laquelle est fixée au moins une section du ruban de film (3), et
les deux bords du ruban de film (3) se situent entre des spires mutuellement voisines à l'intérieur de l'enroulement.

2. Rouleau de bande d'étanchéité suivant la revendication 1, **caractérisé en ce qu'**une feuille de couverture (4) recouvre le côté inférieur de la bande de mousse souple (1) et la couche auto-adhésive (2).

3. Rouleau de bande d'étanchéité suivant l'une des revendications 1 et 2, **caractérisé en ce que** le ruban de film (3) recouvre totalement la couche auto-adhésive (2) de la bande de mousse souple (1), est guidé bilatéralement hors de l'enroulement sur la spire, sur laquelle il est collé en partie basse, est rabattu bilatéralement sur le côté supérieur de la bande de mousse souple (1) et inséré par ses deux bords entre cette spire et la spire voisine.

4. Rouleau de bande d'étanchéité suivant la revendication 3, **caractérisé en ce que** le ruban de film (3) est muni d'une multiplicité de percées dans sa section adhérant à la couche auto-adhésive (2) et est recouvert d'une feuille de couverture (4) sur son côté opposé à la couche auto-adhésive (2).

5. Rouleau de bande d'étanchéité suivant la revendication 1, **caractérisé en ce que** la bande de mousse souple (1) est équipée unilatéralement d'une couche adhésive et est munie d'une feuille de couverture (4), que le ruban de film (3) présente une largeur, qui correspond au moins à la largeur de la bande de mousse souple (1) en plus de la hauteur de cette dernière dans l'état de compression, et que la section du ruban de film (3) est insérée au-dessous de la feuille de couverture (4) sur au moins un côté de la bande de mousse souple (1) dans la zone de bordure de cette dernière.

6. Rouleau de bande d'étanchéité suivant la revendication 5, **caractérisé en ce que** la zone du ruban de film (3), non adhérente à la couche auto-adhésive (2), recouvre un flanc latéral (1a) et le côté supérieur de la bande de mousse souple (1).

7. Rouleau de bande d'étanchéité suivant la revendication 6, **caractérisé en ce que** la zone du ruban de film (3), non adhérente à la couche auto-adhésive (2), recouvre également le second flanc latéral (1a) de la bande de mousse souple (1).

8. Rouleau de bande d'étanchéité suivant la revendication 7, **caractérisé en ce que** le second bord du ruban de film (3) est inséré entre le côté de la feuille de couverture (4), opposé à la couche auto-adhésive (2), et le côté supérieur de la bande de mousse souple (1) de la spire voisine.

9. Rouleau de bande d'étanchéité suivant l'une des revendications précédentes, **caractérisé en ce que** le ruban de film (3a) est muni de plusieurs plis longitudinaux (3a) dans sa section s'appliquant sur le flanc latéral (1a) de la bande de mousse souple (1).

10. Rouleau de bande d'étanchéité suivant l'une des revendications précédentes, **caractérisé en ce que** le ruban de film (3) présente sur le côté supérieur de la bande de mousse souple (1) un pli configuré en une boucle, qui forme une réserve de gonflement.

11. Rouleau de bande d'étanchéité suivant la revendication 9, **caractérisé en ce que** les plis (3a) sont collés chacun en soi avec un adhésif se décollant à retardement, qui retarde le gonflement de la bande de mousse souple (1) comprimée.

12. Rouleau de bande d'étanchéité suivant l'une des revendications 1 à 8, **caractérisé en ce que** le ruban de film (3) est muni d'une poche longitudinale (3b) dans sa zone s'appliquant sur le flanc latéral (1a) de la bande de mousse souple (1).

13. Rouleau de bande d'étanchéité suivant la revendication 12, **caractérisé en ce que** la poche (3b) est remplie d'une matière intumescente.

14. Rouleau de bande d'étanchéité suivant l'une des revendications précédentes, **caractérisé en ce que** la bande de mousse souple (1) est comprimée avec une possibilité de rappel élastique à l'intérieur du rouleau.

15. Procédé de fabrication d'un rouleau de bande d'étanchéité suivant la revendication 1, comprenant les étapes suivantes :
application d'une couche auto-adhésive (2) et d'une feuille de couverture (4) sur un côté inférieur d'une large bande de mousse souple (1),
enroulement de la bande de mousse souple et blocage de la bande de rouleaux en mousse souple ainsi formée,
découpe de la bande de rouleaux en mousse souple en rouleaux de bande d'étanchéité en forme de disques d'une largeur prédéfinie,
décollement mécanique progressif de l'assemblage entre la couche auto-adhésive (2) et la feuille de couverture (4) de chaque rouleau de bande d'étanchéité sur au moins une partie de la largeur de ce dernier,
insertion d'un ruban de film (3) flexible et lâche dans la fente ainsi produite, le ruban de film (3) présentant alors une largeur qui correspond au moins à la somme de la largeur de la section du ruban de film (3), insérée dans la fente, et de l'épaisseur d'une couche de mousse souple dans l'état de compression et au moins à une partie de la largeur du rouleau de bande d'étanchéité,
fixation du ruban de film (3) sur la couche auto-adhésive (2) et fermeture de la fente et
rabattement continu de la zone du ruban de film (3),
dépassant du rouleau de bande d'étanchéité, sur ce dernier et insertion du ruban de film (3) entre le côté supérieur de la couche de mousse souple, avec laquelle est collé le ruban de film (3), et la feuille de couverture (4) adhérant sur la couche de mousse souple voisine.

16. Procédé suivant la revendication 15, **caractérisé en ce que** la fixation du ruban de film (3) sur la couche auto-adhésive (2) et le traitement ultérieur du ruban de film (3) fixé, dépassant de la bande d'étanchéité, sont réalisés en une opération unique.

17. Procédé de fabrication d'un rouleau de bande d'étanchéité suivant la revendication 1, comprenant les étapes suivantes :
application d'une couche auto-adhésive (2) et d'une feuille de couverture (4) sur un côté inférieur d'une bande large de mousse souple (1),
enroulement de la bande de mousse souple et blocage de la bande de rouleaux en mousse souple ainsi formée,
découpe de la bande de rouleaux en mousse souple en rouleaux de bande d'étanchéité en forme de disques d'une largeur prédéfinie,
déroulement d'un rouleau de bande d'étanchéité en forme de disque,
décollement mécanique progressif de l'assemblage entre la couche auto-adhésive (2) et la feuille de couverture (4) de chaque bande d'étanchéité déroulée sur au moins une partie de la largeur de cette dernière,
insertion d'un ruban de film (3) flexible et lâche dans la fente ainsi produite, le ruban de film (3) présentant alors une largeur, qui correspond au moins à la somme de la largeur de la section du ruban de film (3), insérée dans la fente, et de l'épaisseur d'une couche de mousse souple dans l'état de compression et au moins à une partie de la largeur de la bande d'étanchéité,
fixation du ruban de film (3) sur la couche auto-adhésive (2) sur au moins une partie de la largeur de cette dernière et fermeture de la fente,
rabattement continu de la zone du ruban de film (3),
dépassant du rouleau de bande d'étanchéité, sur la bande d'étanchéité, et
enroulement de la bande d'étanchéité comprimée en un rouleau de bande d'étanchéité.

18. Procédé suivant l'une des revendications 15 à 17, **caractérisé en ce que** l'assemblage collé entre la couche auto-adhésive (2) et la feuille de couverture (4) n'est décollé mécaniquement de façon progressive que sur un côté de la bande d'étanchéité et que sur une partie de la largeur de cette dernière et seule une section de bordure du ruban de film (3) est insérée dans la fente ainsi produite.

19. Procédé suivant l'une des revendications 15 à 17, **caractérisé en ce que** l'assemblage collé entre la couche auto-adhésive (2) et la feuille de couverture (4) est d'abord décollé mécaniquement de façon progressive sur un premier côté de la bande d'étanchéité et seulement sur une partie de la largeur de cette dernière, une première section de bordure d'un ruban de film (3) est insérée et fixée dans la fente ainsi produite, le ruban de film (3) ayant alors une largeur, égale à la somme du double de la largeur du ruban inséré, du double de l'épaisseur de la bande de mousse souple (1) dans l'état de compression et de la largeur de la bande de mousse souple (1), que le ruban de film (3) est enlacé autour de la spire de la bande de mousse souple (1), sur laquelle il est fixé, que l'assemblage collé entre la couche auto-adhésive (2) et la feuille de couverture (4) est décollé mécaniquement de façon progressive sur l'autre côté de la bande d'étanchéité et seulement sur une partie de la largeur de cette dernière et la seconde section de bordure du ruban de film (3) est insérée et fixée dans la fente ainsi produite.

20. Procédé suivant l'une des revendications 15 à 19, **caractérisé en ce que**, lors de la fixation de la section de bordure du ruban de film (3), environ 2 mm de sa largeur sont insérés dans la fente et fixés sur la surface adhésive.

21. Dispositif de fabrication d'un rouleau de bande d'étanchéité suivant la revendication 1 par équipement d'un rouleau de bande d'étanchéité en un ruban de film (3), lequel rouleau comprend une bande de mousse souple (1) de section transversale rectangulaire, qui est munie sur son côté inférieur d'une couche auto-adhésive (2) recouverte d'une feuille de couverture (4) et est enroulée dans l'état de compression en un rouleau de bande d'étanchéité, sur un corps d'enroulement rond, de telle sorte que la bande de mousse souple (1) et la feuille de couverture (4) alternent dans la direction radiale, dispositif comprenant :
un plateau tournant pour la pose d'un rouleau de bande d'étanchéité,
un dispositif de maintien du rouleau de bande d'étanchéité sur le plateau tournant dans une position centrée sur l'axe de rotation de ce dernier,
au moins un sabot en forme de charrue, fixé par l'intermédiaire du plateau tournant sur un support,
lequel sabot présente une arête de sortie et un côté arrière,
un dispositif de déplacement du support dans la direction radiale par rapport au plateau tournant,
un dispositif d'arrivée d'un ruban de film (3) en direction du sabot à partir du côté arrière de ce dernier,
un dispositif d'abaissement du support en direction du plateau tournant et
un dispositif de rotation du plateau tournant dans la direction orientée du côté arrière en direction de l'arête de sortie du sabot.

22. Dispositif suivant la revendication 21, dans lequel deux sabots en forme de charrue sont disposés sur le support à distance mutuelle radiale et avec un écartement angulaire.

23. Dispositif de fabrication d'un rouleau de bande d'étanchéité suivant la revendication 1 par équipement d'un rouleau de bande d'étanchéité en un ruban de film (3), lequel rouleau comprend une bande de mousse souple (1) de section transversale rectangulaire, qui est munie sur un côté inférieur d'une couche auto-adhésive (2) recouverte d'une feuille de couverture (4) et est enroulée dans l'état de compression, pour former le rouleau de bande d'étanchéité, sur un corps d'enroulement rond de telle sorte que la bande de mousse souple (1) et la feuille de couverture (4) alternent dans la direction radiale, dispositif comprenant :
deux bancs d'enroulement, dont un banc de déroulement se prête à recevoir un rouleau de bande d'étanchéité à traiter, et un banc d'enroulement se prête à recevoir un corps d'enroulement, sur lequel doit être enroulé le rouleau de bande d'étanchéité conforme à l'invention,
avec des dispositifs correspondants pour le freinage du premier banc d'enroulement et pour l'entraînement du deuxième banc d'enroulement,
un dispositif disposé entre les deux bancs d'enroulement avec un sabot, qui est conçu pour être introduit entre la feuille de couverture (4) et la couche auto-adhésive (2) de la bande d'étanchéité déroulée, s'étendant entre les deux bancs d'enroulement,
un troisième banc d'enroulement, qui est prévu pour recevoir une bobine pour un ruban de film (3),
des dispositifs de guidage entre le troisième banc d'enroulement et le sabot, qui sont conçus pour guider un ruban de film (3) du troisième banc d'enroulement en direction du sabot, et
des dispositifs de rabattement, disposés entre le sabot et le deuxième banc d'enroulement, pour rabattre le ruban de film (3) sur le côté supérieur libre de la bande de mousse souple (1).

24. Dispositif suivant la revendication 23, **caractérisé en ce que** des dispositifs se situent dans l'espace intermédiaire compris entre le premier et le deuxième banc d'enroulement, lesquels dispositifs se prêtent à maintenir largement dans l'état de compression la bande d'étanchéité déroulée du premier banc d'enroulement, état dans lequel elle sort du premier banc d'enroulement.
